# EUROPEAN PATENT APPLICATION

(11) **EP 3 173 200 A1**
(43) Date of publication of application: **31.05.2017**
(21) Application number: 15382589.8
(22) Date of filing: 27.11.2015
(51) Int. Cl.: B27C 5/10, B27F 5/02, B27F 5/12, B23Q 9/00, B25F 5/00, B23Q 35/08

(54) **PORTABLE HAND ROUTER FOR MAKING CAVITIES ON A SURFACE OF A BOARD**

(71) Applicant: Virutex S.A., 08028 Barcelona (ES)
(72) Inventor: CAMPAÑA MARTÍNEZ, José, 08028 Barcelona (ES)
(74) Representative: Curell Suñol S.L.P.

(57) **Abstract**

The present invention relates to a portable hand router for making cavities in a board, said cavities having a channel with a first width at the level of the surface that is less than a second width at a deeper level. The router is configured as a surface router, with a motor body (6) and a milling cutter arbor in an axial direction, perpendicular to a planar base (4), axial guiding means (10) for moving the motor body (6) in the axial direction and transverse guiding means (11) for moving the motor body (6) in a transverse direction. The router comprises a mechanical limiting device (16,17,18) for limiting the movement of the milling cutter arbor in the transverse direction (17) within a predetermined path while the motor body (6) is in an axial working position, and a mechanical locking device (18 and 19 or 23) for locking the axial working position while the milling cutter arbor is moved in the transverse direction.

## Description

### Field of the Invention

The invention is comprised in the field of portable hand tools for woodworking and relates to a portable hand router for making cavities of a specific type on a surface of a board. Specifically, the cavities referred to in the present invention are cavities having a channel with a first width at the level of the surface and a second width at a deeper level that is greater than the first width, and which are intended for receiving a connector for joining two boards. For this purpose, the cavities must be made both on the edge of the board and on one of the face sides thereof.

### State of the Art

Known machines capable of making the specific type of cavity to which the invention refers are cutting machines with computer numerical control (CNC). To make a cavity of this type, these machines move the milling cutter at a constant depth along a transverse path. The milling cutter used is of the type comprising a narrow segment with a maximum diameter corresponding to the first width of the channel of the cavity to be made, followed by an end segment with a larger maximum diameter, corresponding to the second width. These known machines are fixed installations that are designed for large-scale and repetitive woodworking jobs in a factory or in a fairly large workshop. It cannot be used for woodworking jobs on the ground, and in addition, its high cost is prohibitive for a small woodworking.

No portable hand machine that allows making the mentioned type of cavity with sufficient precision and reliability is known.

### Description of the Invention

The purpose of this invention is to provide a portable hand machine which can be used on the ground if required and which is capable of making a cavity of the type mentioned with high precision and reliability, using the same type of milling cutter as the CNC cutting machines described above. Another objective of the invention is to provide a machine of this type with a configuration of portable machine-tool, without a numerical control system, and which can be supplied at an affordable cost for an individual carpenter or a small woodworking workshop.

This is achieved by means of a portable hand cutter that is particularly designed to make cavities of the type described above, and having the general configuration of a surface router, i.e., comprising a planar base defining a main support plane for applying the router against the surface of the board, a frame, a motor body that is assembled on the frame and comprising a milling cutter arbor extending in an axial direction perpendicular to the planar base, a milling cutter assembled at the end of the milling cutter arbor, a window made in the planar base and arranged such that the milling cutter can emerge through the window by means of a movement of the milling cutter arbor in the axial direction, axial guiding means configured for moving the motor body in the axial direction from a axial rest position, in which the milling cutter does not project through the window, to at least one axial working position in which the milling cutter projects through the window, and transverse guiding means configured for moving the motor body in a transverse direction, perpendicular to the axial direction, and thereby moving the milling cutter arbor in the transverse direction. The portable hand machine according to the invention, thus configured like a surface router, is characterized in that it comprises a mechanical limiting device configured for limiting the movement of the milling cutter arbor in the transverse direction within at least one predetermined path while the motor body is in the axial working position, and a mechanical locking device configured for locking the axial working position while the milling cutter arbor is moved in the transverse direction along said at least one predetermined path.

As will be seen below in the detailed description of an embodiment, the portable hand machine according to the invention can be used in a manner similar to a surface router, being able to be applied on any board in a workshop or on the ground, for making the cavities in question with high precision and reliability and being very easy to use, all this without requiring numerical control devices or expensive installations.

Preferred embodiments, the features of which are included in the dependent claims, have been provided on the basis of the invention defined in the main claim.

In some preferred embodiments, the mechanical locking device is formed by a slide integral with the motor body and a guiding structure integral with the planar base, and respective coupling parts are provided in the slide and in the guiding structure, respectively. These coupling parts are configured for cooperating with one another when the motor body is in the axial working position, such that the coupling part of the slide can move relatively with respect to the coupling part of the guiding structure in said transverse direction but is locked with respect to same in said axial direction. This solution has the advantage of offering great precision and reliability in cutting with a simple mechanical configuration.

Preferably, the guiding structure is shaped such that it defines a stop for the slide, limiting the movement of said slide in the transverse direction within the predetermined path while the motor body is in the axial working position, whereby the slide and the guiding structure form both the mechanical locking device and the mechanical limiting device. A compact configuration that allows producing both devices with a minimum number of parts and in a reduced space is thereby achieved.

In a possible embodiment, the slide is formed by a rod parallel to the axial direction and provided with a lug constituting the coupling part, and the guiding structure comprises at least a first passage sized for letting pass the lug when the motor body goes from the axial rest position to the axial working position, and at least a first batten extending from the first passage in the transverse direction and constituting the coupling part, such that in the axial working position the lug rests on the first batten, thereby locking the movement of the slide in the axial direction in the sense that it goes from the milling cutter towards the motor body, while the milling cutter arbor is moved in the transverse direction along the predetermined path. This configuration has the advantage that it allows easy and intuitive handling of the machine by the user. As will be seen below in the detailed description, to make a cavity in a board the user laterally moves the motor body in the rest position in order to place the lug opposite the first passage, moves it down to the working position and moves it transversely to make the predetermined path.

In particularly advantageous embodiments, the mechanical limiting device is configured such that it limits the movement of the milling cutter arbor in the transverse direction within two different predetermined paths, while the motor body is in the axial working position, and the mechanical locking device is configured for locking said axial working position while the milling cutter arbor is moved in the transverse direction along each of said two different predetermined paths. The router further comprises a path selector acting on the mechanical limiting device for selecting either of the two different predetermined paths. This solution allows using the same machine to make two types of cavities with two different lengths, the user being able to choose one or the other by simply actuating the path selector.

In a embodiment possible of this last type, and based on the embodiment described above comprising a lug and a guiding structure with a first passage, said guiding structure comprises at least a second passage sized for letting the lug pass when the motor body goes from the axial rest position to the axial working position, and at least a second batten extending from the second passage in the transverse direction and constituting the coupling part, such that in the axial working position the lug can rest on the second batten, thereby locking the movement of the slide in the axial direction in the sense that it goes from the milling cutter towards the motor body. The second batten is shorter than the first batten, such that according to if the lug rests on the first batten or on the second batten, it locks the movement of the slide in the axial direction in the sense that it goes from the milling cutter towards the motor body while the milling cutter arbor is moved in the transverse direction along, respectively, a first predetermined path or a second predetermined path shorter than said first predetermined path.

Preferably, the assembly formed by the second passage and the second batten is arranged opposite the assembly formed by the first passage and the first batten, and such that when the rod forming the slide rotates 180º about its own axis, the lug goes from resting on the first batten to resting on the second batten and vice versa. The path selector is an actuator that allows rotating the rod forming the slide 180º about its own axis. This solution allows easy and robust handling by the user for selecting the predetermined path that is going to be used to make the cavity.

In preferred embodiments, the portable hand router comprises a retractable support part which can adopt a retracted position, in which said support part does not project from the main support plane, and a raised position in which said support part projects from the main support plane and defines a planar support surface forming a dihedron with the main support plane, said dihedron having an axis parallel to the transverse direction. This configuration allows positioning the machine with ease, precision and reliability for making a cavity on the edge of the board, or for making the same cavity on a face side of the board in a position adjacent to the edge.

Preferably, the dihedron forms a 90º angle. More preferably, the machine comprises a mechanism for regulating the angle formed by the dihedron, said mechanism being configured for selectively fixing said angle at least in a range comprised between 180º and 90º, both included. The machine thus constituted is particularly suitable for making cavities on edges of boards cut at different angles, including edges cut at 45º and at 90º.

Preferably, the planar support surface has a width substantially equal to that of the planar base, and when the support part is in the retracted position, said planar support surface is coplanar with said planar base such that with the latter it forms the main support plane of the machine. This configuration has the advantage of offering great stability when the machine supported on a face side of a board is moved to make a cavity in said face side in a position spaced from the edge of the board.

The invention also comprises other features concerning detail illustrated in the detailed description of an embodiment of the invention and in the attached drawings.

### Brief Description of the Drawings

The advantages and features of the invention can be seen from the following description in which, with a non-limiting character with respect to the scope of the main claim, a preferred embodiment of the portable hand router according to the invention is described in reference to the drawings.
Figures 1 and 2 are, respectively, a plan view and a section view taken along plane II-II indicated in Figure 1, of a possible shape of the cavity made by the portable hand router according to the invention.
Figures 3 and 4 are plan views of cavities made by the router on a face side and on an edge of a board, respectively.
Figure 5 is a side view of a milling cutter suitable for making a cavity like the one shown in Figures 1 and 2.
Figures 6, 7 and 8 are, respectively, a front view, a side view and a bottom view of the router with the motor body in the axial rest position.
Figures 9 and 10 are, respectively, a perspective view and a bottom view of the assembly formed by the slide and the guiding structure, in a position corresponding to the axial rest position of the motor body, and with the lug arranged facing the first passage.
Figures 11 and 12 are views similar to the preceding drawings, with the lug arranged facing the second passage.
Figure 13 is a similar view to Figure 10, but in a position corresponding to the axial working position of the motor body, and with the lug arranged under the first batten and sliding supported against same.
Figure 14 is a front view of the router with the motor body in the axial working position.
Figure 15 is a side view of the router with the motor body in the axial rest position, and with the support part in the raised position forming with the main support plane a 90º dihedron.
Figure 16 is a bottom perspective view of the router in the same position as in the preceding figure.

### Detailed Description of an Embodiment of the Invention

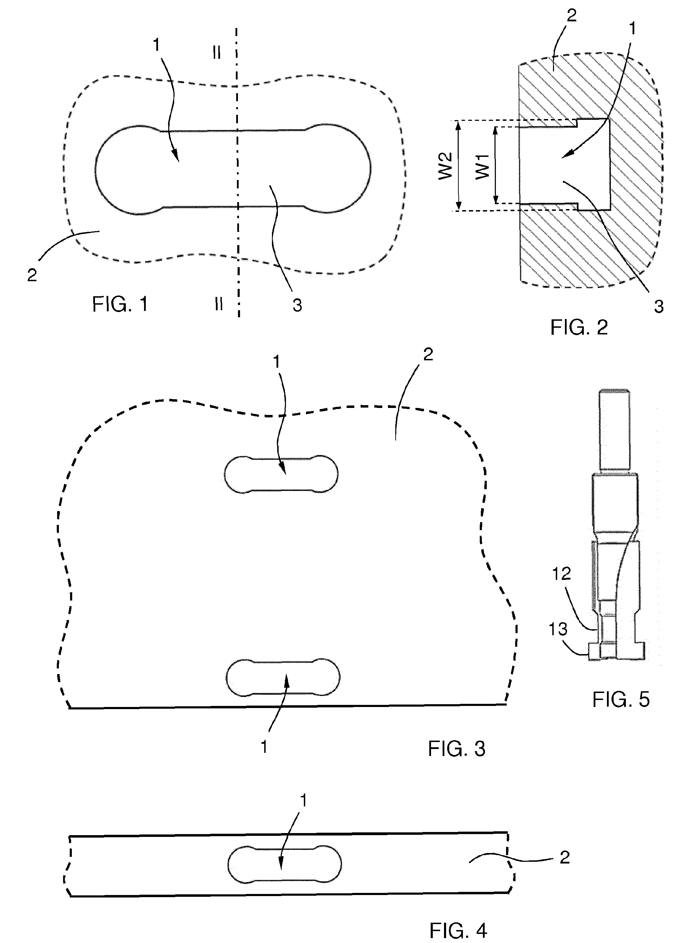

The portable hand router depicted in the drawings is particularly designed for being able to make cavities of a particular type in wooden boards. The cavities of this type, such as the ones depicted in Figures 1 and 2, are characterized in that they comprise a channel 3 with a first width W1 at the level of the surface of the cavity and a second width W2 at a deeper level which is greater than the first width W1. In the plan view of Figure 1, it can be seen that the channel 3 is framed between two boreholes having a diameter corresponding to the second width W2. These boreholes are formed when the milling cutter enters at a deeper level in the board, at a lateral end of the channel 3 to be formed, and when it exits at the other end. Nevertheless, the invention also is applied to cavities with other shapes pertaining to the indicated type. For example, it is applied to cavities in which there is only one borehole at a lateral end of the channel, because the milling cutter enters and exits at the same site. It will also be observed that although Figure 2 shows a channel 3 with a T-shaped section, which is made by a milling cutter 8 in a corresponding manner shown in Figure 5, the invention is also applied to other cavities with different section shapes, made using differently shaped milling cutters.

As will be understood from the following description, the router according to the invention is suitable for making cavities of this type on the face side of a board, in a position adjacent to the edge of the board or in a position spaced from the edge, as shown in Figure 3, as well as cavities on the edge of the board as shown in Figure 4.

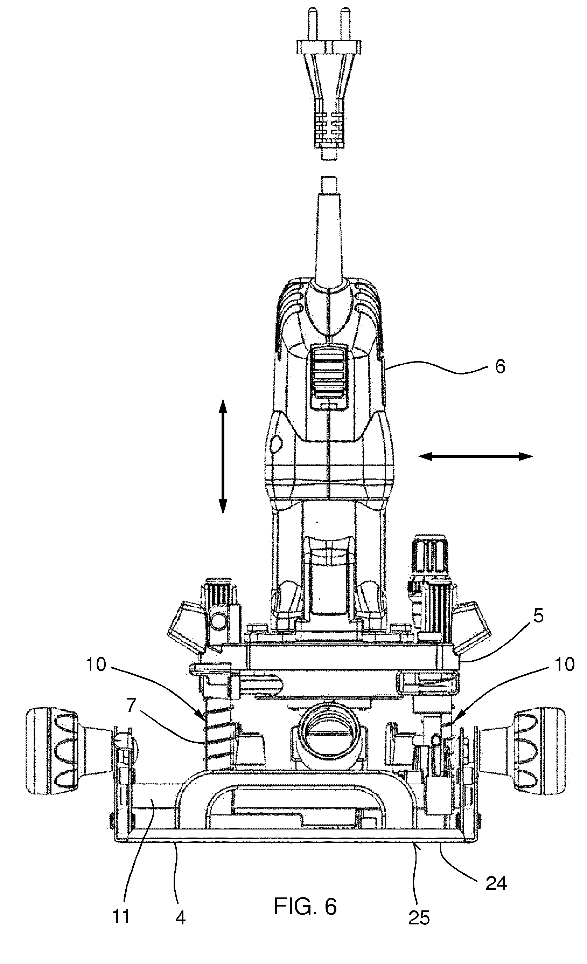

As can be seen in Figures 6 to 8, the router has the general configuration of a surface router, i.e., comprising a planar base 4 defining a main support plane for applying the router against the surface of the board, a frame 5, a motor body 6 assembled in the frame 5 and comprising a milling cutter arbor extending in an axial direction perpendicular to the planar base 4, a milling cutter 8 assembled at the end of the milling cutter arbor, a window 9 made in the planar base 4 through which the milling cutter 8 emerges when the milling cutter arbor is moved in the axial direction, axial guiding means 10 for moving the motor body 6 in the axial direction from an axial rest position, in which the milling cutter 8 does not project through the window 9, to at least one axial working position in which the milling cutter 8 projects through said window 9, and transverse guiding means 11 configured for moving the motor body 6 in a transverse direction, perpendicular to the axial direction, and thereby moving said the milling cutter arbor in said transverse direction. The two arrows of Figure 6 show the axial movement direction and the transverse movement direction of the motor body 6, respectively. In the depicted embodiment, the axial guiding means 10 consist of two posts perpendicular to the main support plane, in which the frame 5 is assembled in a sliding manner, such that the latter can move in the axial direction guided by the posts. Springs 7 applying a return force on the frame 5 in the direction of moving away from the main support plane are provided in these posts. To move the motor body 6 in the axial direction towards the main support plane, and to go from the rest position to the working position, the user simply holds the motor body 6 with one hand and moves it against the force of the springs 7. The transverse guiding means 11 consist of two parallel bars extending in the transverse direction and in which a platform bearing the two posts is assembled in a sliding manner, such that the integral block formed by this platform and the two posts can move in the transverse direction guided by the bars. To move the motor body 6 in the transverse direction, the user simply holds the motor body 6 with one hand and moves it in said direction.

This general configuration is known in surface routers and allows making grooves in surfaces of boards. To that end, the user first moves the motor body in the axial direction to the working position, in which the milling cutter enters the board, and then moves said motor body in the transverse direction to make the groove. However, known routers do not allow making a cavity like the one shown in Figures 1 and 2 with enough precision and reliability. In theory, a conventional surface router equipped with a milling cutter 8 like the one in Figure 5 could make a cavity like the one in Figures 1 and 2. However, in practice skilled handled of the router would be required, and this is not within reach of most users.

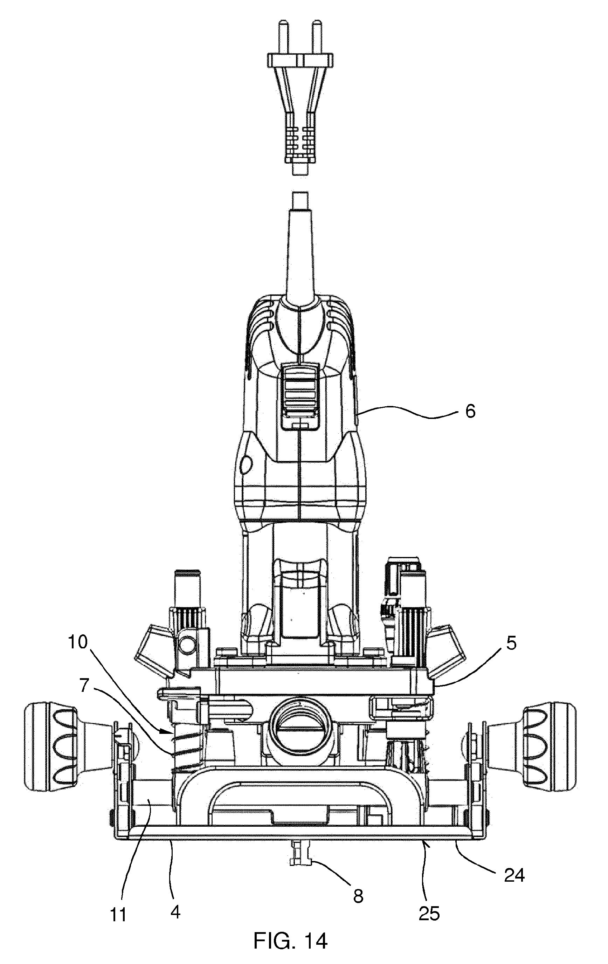

The router according to the invention is equipped with a milling cutter 8 comprising a narrow segment 12 with a maximum diameter corresponding to that of the first width W1, followed by an end segment 13 with a larger maximum diameter, corresponding to that of the second width W2. In the axial working position, the narrow segment 12 and the end segment 13 of the milling cutter 8 project through the window 9, as can be seen in Figure 14. Therefore, when after this working position, in which two segments 12, 13 of the milling cutter 8 have entered the board, the motor body 6 is moved in the transverse direction, a cut is made in the board forming the channel 3 shown in section view in Figure 2. In order to maintain exactly the same section of the channel 3 along the entire length thereof, the router comprises a mechanical limiting device 14 configured for limiting the movement of the milling cutter arbor in the transverse direction within a predetermined path while the motor body 6 is in the axial working position, and a mechanical locking device 15 configured for locking said axial working position while the milling cutter arbor is moved in the transverse direction along the predetermined path.

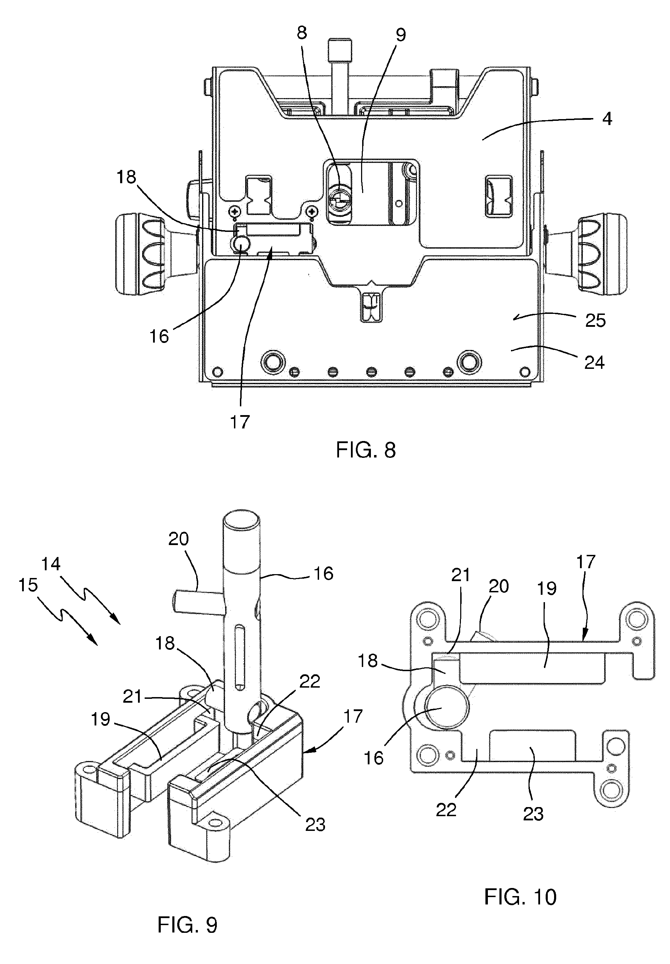

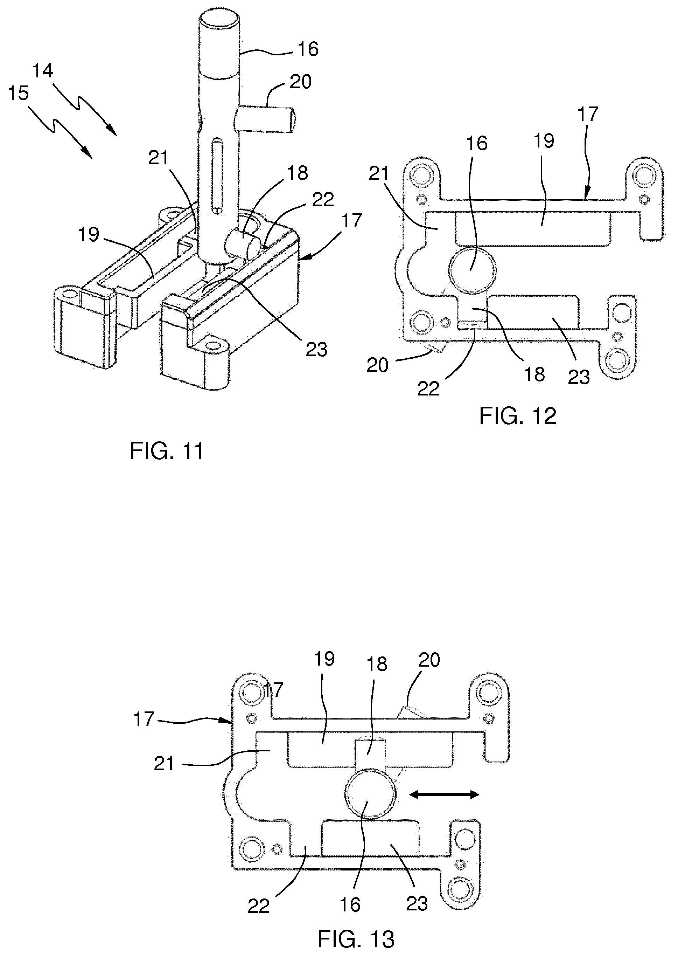

In the embodiment depicted in the drawings, the mechanical limiting device 14 and the mechanical locking device 15 are one and the same mechanism, shown in different positions in Figures 9 to 13. This mechanism consists of a slide 16 which is integral with the motor body 6 and a guiding structure 17, which in turn is integral with the planar base 4. The slide 16 and the guiding structure 17 are provided with respective coupling parts, respectively 18 and 19, 23, cooperating with one another, when the motor body 6 is in the axial working position. In this working position, depicted in Figure 13, the coupling part 18 of the slide 16 can move relatively with respect to the coupling part 19, 23 of the guiding structure 17 in the transverse direction, but is locked with respect to same in the axial direction.

More specifically, as can be seen in particular in Figures 9 and 11, the slide 16 is a rod which is parallel to the axial direction and which is provided with a lug 18 constituting the coupling part of said slide 16. The guiding structure 17 is a part fixed to the planar base 4 and forming a first passage 21 and a second passage 22, both sized for letting the lug 18 pass when the motor body 6 goes from the axial rest position to the axial working position. The guiding structure 17 also forms a first batten 19 and a second batten 23 extending respectively from the first passage 21 and from the second passage 22 in the transverse direction, and constituting the coupling part of the guiding structure 17.

In the axial working position, the lug 18 can rest on the first batten 19 or on the second batten 23, thereby locking the movement of the slide 16 in the axial direction in the sense that it goes from the milling cutter 8 towards the motor body 6, while the milling cutter arbor is moved in the transverse direction along a first predetermined path defined by the length of the first batten 19, or along a second predetermined path defined by the length of the second batten 23.

The assembly formed by the second passage 22 and the second batten 23 is arranged opposite the assembly formed by the first passage 21 and the first batten 19, such that when the rod forming the slide 16 rotates 180º about its own axis, the lug 18 goes from resting on the first batten 19 to resting on the second batten 23, and vice versa. The rod forming the slide 16 is provided in addition to a pin-shaped actuator extending orthogonally to the axis of the slide 16 and constituting a path selector 20 that allows rotating said slide 16 180º about its own axis for selecting either of the two predetermined paths.

Furthermore, the guiding structure 17 thus shaped defines stops for the slide 16, limiting the movement thereof in the transverse direction within the first predetermined path or within the second predetermined path, depending on the position of the path selector 20, while the motor body 6 is in the axial working position.

To make a cavity according to the first predetermined path, defined by the length of the first batten 19, a user starts from an initial state in which the motor body 6 is in the initial rest position and the lug 18 is located facing the first passage 21. This position corresponds to Figures 6 to 8 for the router in general, and to Figures 9 and 10 for the assembly formed by the slide 16 and the guiding structure 17. The motor body 6 is then moved in the axial direction, towards the main support plane, to the axial working position, in which the milling cutter 8 projects from the window 9 and makes a first borehole in the board, at an end of the channel 3 that will be made, with a diameter corresponding to the second width W2. In this position the lug 18 is located right below the first batten 19. Then the motor body 6 is moved in the transverse direction to make the channel of the cavity. During this movement, the lug 18 slides while resting on the first batten 19 and stays supported thereagainst as a result of the return force in the axial direction provided by the springs 7 of the posts, which push the motor body 6 axially towards its axial rest position. The position of the lug 18 during this travel is shown in Figure 13, in which movement in the transverse direction is indicated with an arrow. This support of the lug 18 on the first batten 19 assures the exact maintenance of the axial position of the slide 16, and therefore of the motor body 6 integral with same, during the movement in the transverse direction, whereby the channel 3 of the cavity is made with a section that is perfectly constant along its entire length. When the slide 16 reaches the end of the path in the transverse direction, abutting against the wall of the guiding structure 17, the lug 18 is located facing another passage identical to the first passage 21 at the opposite end of the first batten 19, such that the lug can pass through this other passage and the motor body 6 returns to its axial rest position, pushed by the return force of the springs 7. In this last movement in the axial direction, the milling cutter 8 exits the board, making a second borehole, having the same diameter as the first, at the other end of the channel 3. However, it will be observed that it is possible to dispense with this other passage and then make a forward-backward trip movement in the transverse direction, such that the lug 18 enters and exits through the same first passage 21. In this last case, the cavity made would have a single borehole at only one end of the channel 3. It will also be observed that although in the depicted embodiment the support of the lug 18 against the first batten 19 is maintained by the return force of the springs 7, other alternative solutions can be provided without departing from the scope of the invention. For example, a solution (not depicted) in which the lug 18 is tightly inserted in a guiding groove demarcated by said first batten 19, such that the lug 18 is supported in the latter by fitting in said groove, can be provided.

To make a longer cavity corresponding to the length of the second batten 23, i.e., to the second predetermined path, the same method is followed but first the slide is rotated 180º with the aid of the path selector 20, in order to place the lug 18 facing the second passage 22, as shown in Figures 11 and 12. When the movement in the transverse direction with the motor body 6 in the axial working position is performed, the lug 18 rests on the second batten 23.

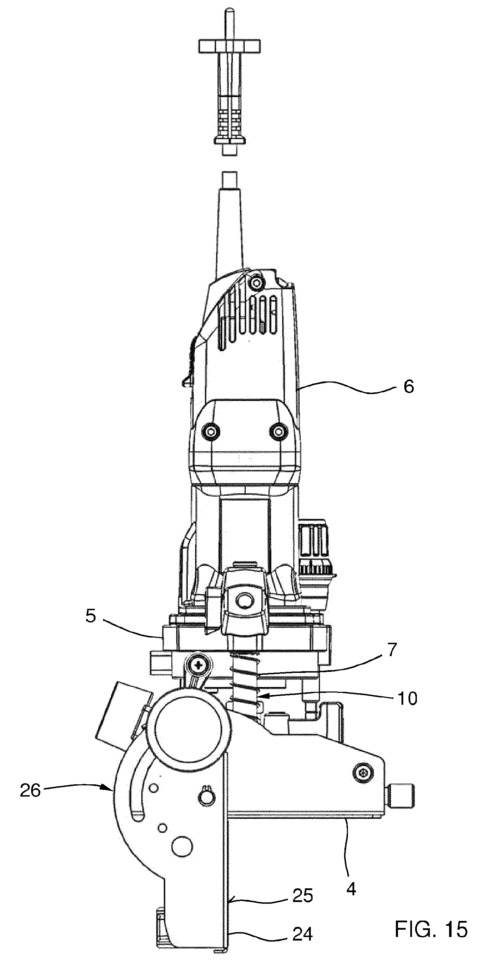

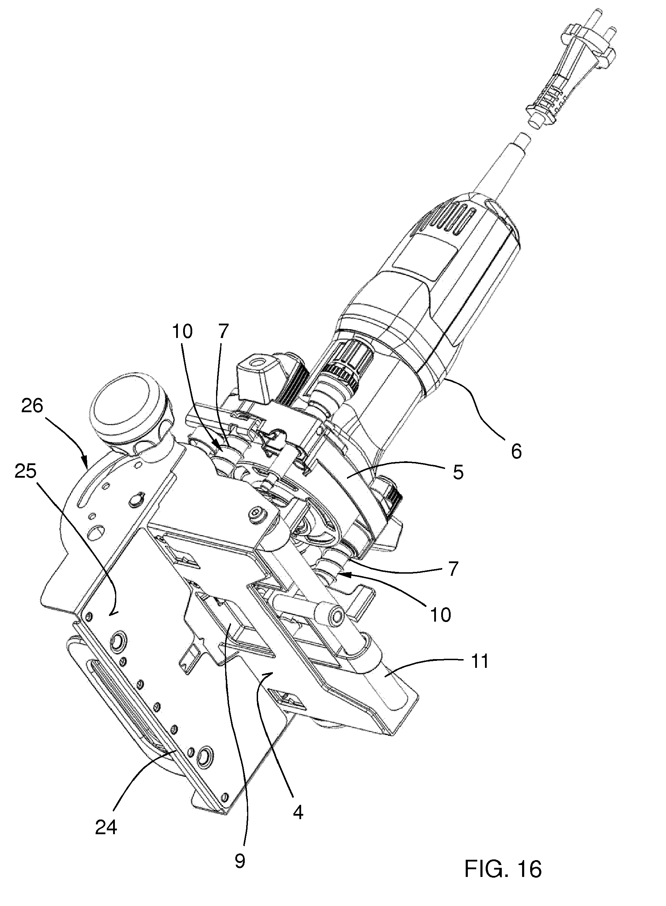

The router further comprises a retractable support part 24 which can adopt a retracted position, like in Figures 6 to 8, in which it does not project from the main support plane, and a raised position, like in Figures 15 and 16, in which it projects from said main support plane and defines a planar support surface 25 forming a dihedron with the main support plane, having an axis parallel to the transverse direction. As can be seen in Figure 16, the planar support surface 25 has a width substantially equal to that of the planar base 4. When the support part 24 is in the retracted position, like in Figures 6 to 8, the planar support surface 25 is coplanar with the planar base 4 and forms with the latter the main support plane of the router. In this position the router can freely slide along the main support plane on a face side of a board, whereby the router can advantageously be used for making a cavity located in said face side of the board and spaced from the edge (upper cavity 1 in Figure 3). In the position shown in Figures 15 and 16, the router can rest against an edge of the board due to the dihedron formed by the support part 24 in the raised position, whereby the router can advantageously be used for making a cavity located in a face side of the board and adjacent to an edge of the board (lower cavity 1 in Figure 3), or a cavity located on an edge of the board (cavity 1 in Figure 4).

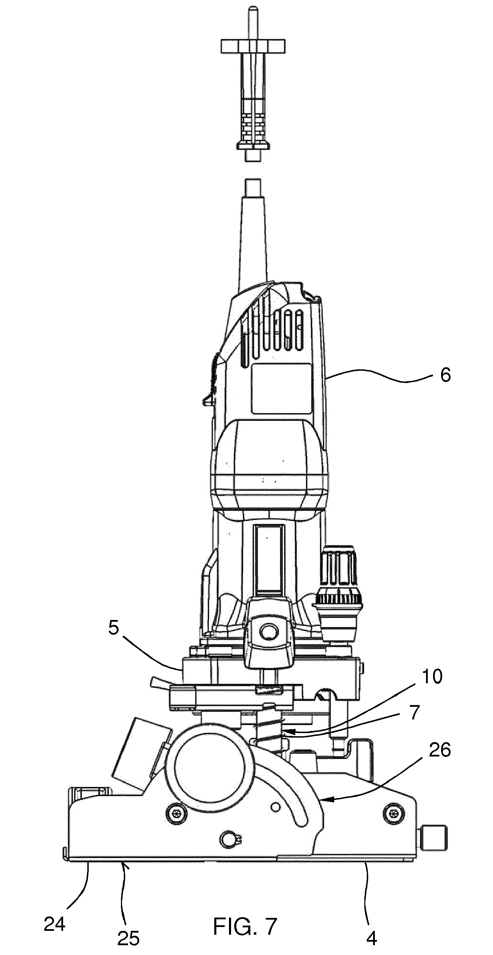

The router further comprises a mechanism 26 for regulating the angle formed by the dihedron. This mechanism 26 consists of side wings arranged in the support part 24 and provided with grooves in an arc of a circle in which a lug integral with the base plate 4 slides, and in handles which can be turned by the user in order to fix a relative position of the lug in the groove. The travel of the lug in the groove is such that it allows selectively fixing the angle of the dihedron at any value comprised between 90º (Figure 15) and 180º (Figure 7), both included.

The router also comprises various reference marks and notches in the planar base 4 which can be used so that the user can determine the correct position of the router for making corresponding cavities in different boards. It also comprises various mechanisms for adjusting reference positions of the milling cutter arbor in the main support plane and reference positions thereof in the axial direction. It is not considered necessary to describe herein these arrangements, as they are known by the person skilled in the art in the field of conventional surface routers.

## Claims

1. A portable hand router for making cavities (1) on a surface of a board (2), said cavities (1) comprising a channel (3) having a first width (W1) at the level of the surface and a second width (W2) at a deeper level, said second width (W2) being greater than said first width (W1), said router comprising a planar base (4) defining a main support plane for applying the router against the surface of the board, a frame (5), a motor body (6) assembled in said frame (5), said motor body (6) comprising a milling cutter arbor extending in an axial direction perpendicular to said planar base (4), a milling cutter (8) assembled at the end of said milling cutter arbor, a window (9) made in said planar base (4) and arranged such that said milling cutter (8) can emerge through said window (9) by means of a movement of said milling cutter shaft in the axial direction, axial guiding means (10) configured for moving said motor body (6) in the axial direction from an axial rest position, in which said milling cutter (8) does not project through said window (9), to at least one axial working position in which said milling cutter (8) projects through said window (9), and transverse guiding means (11) configured for moving said motor body (6) in a transverse direction, perpendicular to said axial direction, and thereby moving said milling cutter arbor in said transverse direction, **characterized in that** it comprises a mechanical limiting device (14) configured for limiting the movement of the milling cutter arbor in the transverse direction within at least one predetermined path while the motor body (6) is in the axial working position, and a mechanical locking device (15) configured for locking said axial working position while the milling cutter arbor is moved in the transverse direction along said at least one predetermined path.

2. The portable hand router according to claim 1, **characterized in that** said mechanical locking device (15) is formed by a slide (16) integral with said motor body (6) and a guiding structure (17) integral with said planar base (4), respective coupling parts (18, 19) being provided in said slide (16) and in said guiding structure (17), respectively, said coupling parts (18, 19) being configured for cooperating with one another when the motor body (6) is in the axial working position, such that the coupling part (18) of the slide (16) can move relatively with respect to the coupling part (19) of the guiding structure (17) in said transverse direction but is locked with respect to same in said axial direction.

3. The portable hand router according to claim 2, **characterized in that** said guiding structure (17) is shaped such that it defines a stop for said slide (16), limiting the movement of said slide (16) in the transverse direction within said at least one predetermined path while the motor body (6) is in the axial working position, whereby the slide (16) and the guiding structure (17) form both said mechanical locking device (15) and said mechanical limiting device (14).

4. The portable hand router according to either claim 2 or 3, **characterized in that** said slide (16) is formed by a rod parallel to said axial direction and provided with a lug (18) constituting said coupling part, and said guiding structure (17) comprises at least a first passage (21) sized for letting said lug (18) pass when the motor body (6) goes from the axial rest position to the axial working position, and at least a first batten (19) extending from said first passage (21) in the transverse direction and constituting said coupling part, such that in said axial working position said lug (18) rests on said first batten (19), thereby locking the movement of said slide (16) in the axial direction in the sense that it goes from the milling cutter (8) towards the motor body (6), while the milling cutter arbor is moved in the transverse direction along said at least one predetermined path.

5. The portable hand router according to any of claims 1 to 4, **characterized in that** said mechanical limiting device (14) is configured such that it limits the movement of the milling cutter arbor in the transverse direction within two different predetermined paths, while the motor body (6) is in the axial working position, and said mechanical locking device (15) is configured for locking said axial working position while the milling cutter arbor is moved in the transverse direction along each of said two different predetermined paths, and **in that** said router comprises a path selector (20) acting on said mechanical limiting device (14) for selecting either of the two different predetermined paths.

6. The portable hand router according to claims 4 and 5, **characterized in that** said guiding structure (17) comprises at least a second passage (22) sized for letting said lug (18) pass when the motor body (6) goes from the axial rest position to the axial working position, and at least a second batten (23) extending from said second passage (22) in the transverse direction and constituting said coupling part, such that in said axial working position said lug (18) rests on said second batten (23), thereby locking the movement of said slide (16) in the axial direction in the sense that it goes from the milling cutter (8) towards the motor body (6), said second batten (23) being shorter than said first batten (19), such that according to whether said lug (18) rests on said first batten (19) or on said second batten (23), it locks the movement of said slide (16) in the axial direction in the sense that it goes from the milling cutter (8) towards the motor body (6) while the milling cutter arbor is moved in the transverse direction along, respectively, a first predetermined path or a second predetermined path shorter than said first predetermined path.

7. The portable hand router according to claim 6, **characterized in that** the assembly formed by said second passage (22) and said second batten (23) is arranged opposite the assembly formed by said first passage (21) and said first batten (19), and such that when the rod forming the slide (16) rotates 180º about its own axis, said lug (18) goes from resting on said first batten (19) to resting on said second batten (23) and vice versa, and **in that** said path selector (20) is an actuator that allows rotating said rod forming the slide (16) 180º about its own axis.

8. The portable hand router according to any of claims 1 to 7, **characterized in that** it comprises a retractable support part (24) which can adopt a retracted position, in which said support part (24) does not project of said main support plane, and a raised position in which said support part (24) projects from said main support plane and defines a planar support surface (25) forming a dihedron with said main support plane, said dihedron having an axis parallel to said transverse direction.

9. The portable hand router according to claim 8, **characterized in that** said dihedron forms an angle of 90º.

10. The portable hand router according to claim 8, **characterized in that** it comprises a mechanism (26) for regulating the angle formed by said dihedron, said mechanism (26) being configured for selectively fixing said angle at least in a range comprised between 180º and 90º, both included.

11. The portable hand router according to any of claims 8 to 10, **characterized in that** said planar support surface (25) has a width substantially equal to the width of said planar base (4), and when said support part (24) is in the retracted position, said planar support surface (25) is coplanar with said planar base (4) such that with the latter it forms said main support plane.
